# EUROPEAN PATENT APPLICATION

(11) **EP 1 605 147 A1**
(43) Date of publication of application: **14.12.2005**
(21) Application number: 05253495.5
(22) Date of filing: 07.06.2005
(51) Int. Cl.: F02B 23/06

(54) **Apparatus for improving combustion**

(30) Priority: 07.06.2004 EP 04253391
(71) Applicant: Delphi Technologies, Inc., Troy, MI 48007 (US)
(72) Inventor: Warry, William David, Whitstable, Kent CT5 3AB (GB); Smith, Steven R., Chatham, Kent ME5 8HP (GB)
(74) Representative: Hopley, Joanne Selina

(57) **Abstract**

A combustor (36c) for use in a direct-inject internal combustion engine is described. The combustor comprises a substantially conical body (38) having a concave outer surface, an apex (40), which preferably receives fuel during at least a first period of an injection event, and a plurality of fuel directing channels (50a,50b,50c) formed in the concave outer surface. The channels are of different lengths and are arranged to direct fuel to an ejection means which ejects fuel into different regions of a combustion chamber (24a,24b) of the engine at different time periods during the injection event to aid the combustion of fuel. The ejection of fuel into different regions of the combustion chamber at different time periods during an injection event enables the dynamics of the combustion process to be controlled, thereby reducing unwanted emissions such as NOx and particulate matter, and to reduce engine noise.

## Description

### Technical Field

The present invention relates to an apparatus for improving combustion in a direct-injection internal combustion engine, particularly, although not exclusively, a direct-injection diesel engine.

### Background Art

In a diesel engine, air is drawn into the engine cylinders during an inlet stroke and then rapidly compressed during a compression stroke to a high pressure which results in heating the air to about 315 to 540 degrees Celsius. Near the end of the compression stroke, a metered quantity of fuel is injected at high pressure as an atomised spray into the combustion chamber of the engine cylinder. There the fuel droplets start to mix with, and are heated by, the air until they detonate and bum to produce power.

When hydrocarbon fuel is burned with air in a diesel engine, the gases produced are predominantly water vapour, carbon dioxide, oxygen and nitrogen - all of which are largely benign. However, deviations from ideal combustion of diesel fuel can lead to the production of unwanted emissions including carbon monoxide, oxides of nitrogen (NOx), hydrocarbons and particulate matter (i.e. soot). Thus diesel engines, despite being the most efficient of the internal combustion engines, still have the capacity to produce emissions which may be harmful to the environment.

The exhaust emissions of primary concern are particulate matter and NOx. It is generally agreed that NOx formation in diesel engines is initiated by the dissociation of atmospheric nitrogen at high temperatures in a complex set of reactions forming nitric oxide (NO), part of which is further oxidised. Collectively, these products and NO are referred to as NOx.

Probably the biggest emissions challenge for designers and manufacturers of diesel engines is reducing NOx emissions. This is because the high combustion temperatures and gas turbulence in a diesel engine combustion chamber favour NOx formation. Fortunately, most nitric oxide is known to be produced early in the combustion cycle, before injected fuel has time to mix fully with the air charge in the engine's cylinder. This strongly suggests the sites where nitric oxide is formed are localised. Diminution of these "hot sites" (where the heat transport systems in the burning gases are presumed to operate slower than the combustion kinetics) acts to reduce NOx formation.

Particulate matter emissions are also the result of the heterogeneous nature of diesel fuel combustion. When diesel fuel is injected into the hot compressed air in the combustion chamber, regions develop that are fuel-rich and oxygen deficient. This triggers a series of condensation or recombinant reactions that form soot nuclei. Unburned or partially burned fuel can coalesce on these nuclei, increasing their size and mass. Finally, these nuclei agglomerate to create visible smoke.

NOx and particulate matter emissions are linked by the nature of diesel combustion. Efforts to reduce particulate matter emissions by increasing combustion efficiency can lead to higher combustion temperatures and, thus, higher NOx emissions. Lowering NOx formation by lowering combustion temperature can lead to incomplete combustion and, thus, higher particulate matter emissions.

Combustion efficiency depends on many factors including rates of injection, spray distribution, rates of fuel evaporation, relative movement and availability of air and fuel, and combustion chamber design. In regions where the fuel is not vaporised or air is lacking, extensive thermal decompositions occur, as manifested by the presence of incandescent carbon, for later combustion by oxidation reactions. The rate of combustion reaction therefore depends on the local air/fuel ratio, as well as on the availability of oxygen.

Conventional direct-injection fuel injection systems generally use multi-outlet injection nozzles which are designed to start atomising fuel the instant the fuel leaves the nozzle. Typically, fuel is injected into the combustion chamber in six flow paths, and continues to be injected in exactly the same place in the combustion chamber for the duration of an injection event. Furthermore, once fuel leaves the fuel injector it may start burning within two millimetres of the nozzle outlets, and the rate of burning may become uncontrollable. This can result in a large proportion of fuel being burnt in super rich conditions and exposed, albeit briefly, to very high temperatures while the surrounding air remains relatively cool. These conditions give rise to the aforementioned unwanted emissions.

Increasingly strict emissions regulations have driven engine designers and manufacturers to develop a variety of emission-reduction technologies to minimise diesel emissions. In Europe, emissions from diesel vehicles are regulated by the Euro 3 standard which is shortly to be replaced by the stricter Euro 4 standard in 2005. The USA has similar stringent standards to which vehicle and engine manufacturers have to adhere.

The use of high pressure fuel pumping systems and split injection systems, as used, for instance, in common-rail diesel fuel injection systems, aids in the reduction of emissions by improving the timing and placement of fuel in the cylinder with respect to the ongoing combustion process during an injection event. This prevents NOx and soot forming in the early stages of combustion and efficiently uses released chemical energy to mix the remaining fuel with air as combustion continues. Thus, combustion is more complete and exhaust emissions are reduced.

Engine designers and manufacturers have also made advances in the configuration of combustion chambers, improving the efficiency in which energy in the intake air is used to distribute fuel around the combustion chamber. Many attempts have also been made to produce an ideal flow pattern for the air and fuel within the combustion chamber. For example, provision of a combustion "bowl" with a raised central portion in the upper region of a piston to permit fuel/air mixing within a direct injection engine is well known. These bowl configurations are often referred to as Mexican-hat designs, and are described in, for example, US patent no. 6,640,772 (Institut Francais Du Petrole), and US patent application nos. 2003/0172902 (Gatellier et al.), 2002/0117146 (Gatellier et al.), and 2003/0226538 (Eckerle et al.). There is, however, room for improvement in the design of combustion chambers to reduce unwanted emissions.

An object of the present invention is thus to provide an apparatus for improving the timing and placement of fuel in a combustion chamber for mixing with air in the combustion of fuel in a direct-injection engine. Another object of the present invention is to provide an apparatus to better control the dynamics of the combustion process in a direct-injection engine. A further object of the present invention is to provide an apparatus to reduce engine noise, NOx and particulate emissions and to improve engine performance. Such apparatus is referred to hereinafter as a 'combustor'.

### Summary of the Invention

According to a first aspect of the present invention there is provided an apparatus for improving combustion in a direct-injection internal combustion engine comprising at least one cylinder having a combustion chamber for receiving an injection of fuel during an injection event, the apparatus comprising a substantially conical body having a concave outer surface, an apex and a plurality of channels formed in the concave outer surface to which fuel is delivered. The apparatus, or combustor, further includes ejection means arranged to eject fuel from the plurality of channels into the combustion chamber. The plurality of channels define a plurality of different routes for fuel flow to the ejection means so that combustible fuel spray zones develop in different regions of the combustion chamber at different times during the injection event to aid the overall combustion process.

In one embodiment, the apex receives at least some of the fuel during at least a first period of the injection event and directs fuel into the plurality of channels. In other words, fuel is directed to the apex, and from there is delivered to the plurality of channels.

Preferably, the injected fuel is in the form of a fuel jet or spray which makes a varying cone angle with the combustor. The cone angle that the fuel jet makes with the combustor may vary by virtue of the combustor moving within the cylinder, by mechanical or electrical adjustment of the fuel injector, by air becoming entrained in the fuel jet, etc. When the cone angle is relatively small, the fuel is received by the apex of the combustor during a first period of the injection event only. Alternatively, the combustor may be shaped and dimensioned such that fuel is received by the apex of the combustor during the whole period of the injection event.

After being received by the combustor apex, the fuel is directed to the channels so as to effectively separate the fuel into a plurality of different fuel paths. The fuel traverses the combustor body via these different fuel paths and is then ejected, via the ejection means, into different regions of the combustion chamber. As the fuel moves away from the combustor body, it interacts with compressed air in the combustion chamber and then atomises, as in a conventional combustion chamber. However, in the present invention, atomisation of fuel does not occur while the fuel is in contact with the combustor body, and thus fuel atomisation is delayed. This advantageously prevents detonation and combustion of fuel on the combustor itself.

Furthermore, the fuel is delivered into the combustion chamber for atomisation, and subsequent detonation, as a plurality of different combustible fuel spray zones that develop at different times depending on the particular flow route (i.e. which one of the plurality of channels) each has taken to reach the combustion space. This also has benefits in terms of the combustion process, as discussed further below.

Another advantage of the present invention is that the surface of the combustor body will be relatively hot by virtue of its location in the combustion chamber. Thus, while traversing the hot combustor body the fuel is heated which speeds up the mixing process when it is later ejected into the combustion chamber.

A further advantage of the present invention is that vapour formed between the (liquid) fuel and the hot surface of the combustor body becomes trapped and assists in reducing the drag on the fuel. Because drag on the fuel is reduced, its momentum is not substantially reduced, and thus when it is ejected from the combustor body it is able to penetrate further into the combustion chamber where the fuel flow paths are more separated and the air in the combustion chamber is cooler. This allows more non-reacting air molecules such as nitrogen to assist in quenching the energy from on-going combustion reactions, thereby discouraging the formation of NOx. It also reduces the probability of partially burnt fuel molecules meeting and forming particulate precursors.

In another embodiment, the apex need not act as a receiver for all of the fuel, and instead some or all of the fuel may be delivered directly to the channels of the apparatus. This may be achieved by providing a plurality of outlets on the injector, some or all of which deliver fuel to the plurality of channels rather than via the apex.

The number of fuel directing channels provided in the outer surface of the combustor body depends upon engine size and fuel consumption requirements of the engine. The purpose of the channels, as well as directing fuel down the outer surface of the combustor body, is to prevent over-thinning of the fuel before it is ejected into the combustion chamber. With too many channels (or no channels at all), the fuel would lose momentum before penetrating far enough into the combustion chamber.

The fuel directing channels are preferably substantially longitudinal. That is, the fuel directing channels may extend from the apex of the combustor body towards the base thereof. Preferably, at least one, or each of, the plurality of fuel directing channels is of a different length, thereby providing respective fuel paths of different lengths on the combustor body so that the fuel is ejected from the combustor at different times during the injection event.

Alternatively, the plurality of fuel directing channels may be comprised of groups of channels of different lengths, with each channel in the group of channels being of the same length. As before, the overall effect is that a plurality of different flow routes are provided for fuel so that combustible fuel spray zones develop in the combustion chamber, once the fuel has traversed the combustor body, at different times.

For example, some of the fuel directing channels may extend substantially the full axial length of the combustor body, while other fuel directing channels may extend only from the apex of the combustor to part-way along the combustor body. In this manner, fuel in a short channel will be ejected into the combustion chamber sooner than fuel in a longer channel. The fuel directing channels may be formed by grooves defined in the conical outer surface of the combustor body.

One advantage, therefore, of ejecting fuel into different regions of the combustion chamber at different time periods using channels of different lengths is that the timing of atomisation and combustion of fuel can be controlled. Thus, a small portion of the injected fuel can be ejected from a short fuel directing channel and then atomised and detonated, and the flame front arising from this process can be used to bum vaporised fuel which has been ejected from a longer fuel directing channel at a later time. Thus, uncontrolled premixing of fuel vapour and air in the combustion chamber can be reduced, resulting in less violent fuel detonations and engine noise.

Another advantage of ejecting fuel into different regions of the combustion chamber at different time periods using channels of different lengths is that the combustion process as a whole starts more slowly than would happen if the fuel were mixed in a traditional combustion chamber. This provides a crucial time window for improving fuel placement in the combustion chamber and allows more fuel and air to mix before combustion starts. This allows more non-reacting air molecules such as nitrogen to assist in quenching the energy from combustion reactions, thereby discouraging the formation of NOx. It also reduces the probability of partially burnt fuel molecules meeting and forming particulate precursors.

A further advantage of the present invention is that chemical energy generated by fuel ejected from short channels in one part of the combustion chamber indirectly agitates and mixes air with fuel ejected from longer channels in other parts of the combustion chamber, before the fuel starts to burn. This process is aided by detonation occurring in regions of the combustion chamber where the fuel flow paths are more widely separated due to the combustor being positioned in the centre of the combustion chamber. As a result of this process, cool non-reacting air molecules such as nitrogen are available to assist in quenching the energy from combustion reactions, thereby discouraging the formation of NOx. It also reduces the probability of partially burnt fuel molecules meeting and forming particulate precursors.

At least one of the plurality of fuel directing channels may be in communication with a plurality of further fuel directing channels. Thus, a branch-like structure of channels may be provided on the combustor body in order to direct fuel to specific parts of the combustor for subsequent ejection into the combustion chamber. Most preferably, the further fuel directing channels are narrower then the fuel directing channels. The advantage of providing the narrower channels of the branched channel structure is that the fuel ejected from a narrower channel has a smaller cross-sectional area than that ejected from a wide channel, and will therefore experience less friction while passing through air. This results in the fuel exiting the narrower channels with a higher velocity, so that the fuel can therefore travel further into the combustion chamber.

Each of the plurality of channels is preferably substantially u- or v-shaped in cross-section along at least part of its length. Preferably, the v-shaped cross-section of a channel is defined by the expression y = +/- log₂(x). The advantage of providing such a v-shaped cross-section is that it helps to keep the penetration of the fuel spray into the combustion chamber substantially constant when the fuel flow paths are switched. The plurality of channels, as well as directing the fuel towards the ejection means, assist with the process of delaying atomisation, as the cross-sectional profile of each channel is designed so that the fuel is substantially prevented from mixing with the air in the combustion chamber while traversing the combustor body.

The ejection means may be defined, at least in part, by an end of each channel remote from the apex of the combustor body. Alternatively, the ejection means may comprise a ramp provided at an end of each channel remote from the apex of the combustor body. Preferably a free end of the ramp (i.e. the end of the ramp which is not attached to the combustor) is oriented to eject fuel away from the combustor body and into a desired region of the combustion chamber where a combustible fuel zone develops.

In another embodiment, the ejection means may further comprise a plurality of wings arranged in the region of the apex of the combustor body, each wing being shaped and dimensioned to receive fuel, and to eject the received fuel, into the combustion chamber during a second period of the injection event. This second period of the injection event may occur when the cone angle that the fuel jet makes with the combustor is relatively large, and may occur once, or several times, during the injection event.

One advantage of providing wings is that they generate a further flow path for fuel along which fuel is ejected into the combustion chamber. Thus, the flow paths in the combustion chamber may be switched, during an injection event, from those generated by the wings to those generated by ramps (or other features), and back again. The advantage of switching flow paths in this manner is that the build up of heat in any one area of the combustion chamber can be reduced. This discourages the formation of NOx, and also reduces the probability of partially burnt fuel molecules meeting and forming particulate precursors. For maximum advantage, the flow paths should be switched between the wings and the ramps (or other features) provided on the combustor body as many times as possible.

The plurality of wings conveniently form a substantially circular platform around the apex of the combustor, the platform having a substantially central aperture defined therein so as to allow fuel to be directed to the apex of the combustor body during the first period of the injection event when the cone angle of the fuel jet is relatively small. The substantially circular platform is preferably raised above the apex of the combustor body.

Preferably, each wing comprises an inverted substantially conical body having a concave base for receiving and ejecting fuel, and is attached to the combustor body via a knife-edge so as not to impede the flow of fuel to the plurality of fuel-directing channels during the first period of the injection event. The central aperture of the platform may be defined by extended portions of the concave base of each wing, known hereinafter as "leading edges". The leading edges of the wings are preferably smoothly contoured to funnel fuel to the fuel directing channels with the minimum amount of resistance.

Advantageously, the combustor body is shaped to conserve fuel momentum and to prevent atomisation of fuel as the trajectory of the fuel changes as it traverses the fuel directing channels. To this end, the combustor may comprise a plurality of circumferential steps formed on the combustor body, the circumferential steps being formed substantially orthogonally to the plurality of substantially longitudinal channels. The circumferential steps act to minimise fuel contact (and therefore drag) with the combustor body. The conical outer surface of the combustor body also acts to maintain the frontal cross-sectional area of the fuel in a knife edge shape as it cuts through air in contact with the combustor body, thereby substantially maintaining its momentum before it is ejected into the combustion chamber, allowing fuel to penetrate further into the combustion chamber.

The combination of the conical outer surface of the combustor body and the circumferential steps allows the size of the combustor body to be increased without unduly increasing the drag applied to the fuel when it is traversing the combustor body. Advantageously, a larger combustor body accommodates more variation in the length of the channels, enabling the rate of combustion to be better controlled. A large combustor body also reduces the number of dense, highly penetrating flow paths required, as generally the flow paths will be shorter and will require less energy to achieve their optimal position within the combustion chamber. Compared with conventional technology, this allows the combustor of the present invention to handle more flow paths without subsequent loss of penetration. It also enables specialised features to be provided at fuel ejecting ends of shorter channels to accelerate the atomisation of fuel. For example, features such as splitters (for splitting fuel into a plurality of separate fuel sprays), impactors (for spattering fuel) and spinners (for splitting and spinning fuel) may be provided. The features contribute to increasing the speed at which the fuel and air within the combustion chamber are mixed, thereby reducing emissions and improving engine performance.

According to a second aspect of the present invention there is provided a direct-injection internal combustion engine comprising at least one cylinder having a cylinder head, a piston reciprocable within the at least one cylinder and having piston crown facing the cylinder head, a combustion chamber defined by at least the piston crown and the cylinder head and fuel injection means for injecting fuel into the combustion chamber during an injection event. An apparatus in the form of a combustor is provided on the piston crown, the combustor comprising: a substantially conical body having a concave outer surface, an apex, a plurality of channels formed in the concave outer surface for receiving fuel that is injected into the engine, and ejection means arranged to eject fuel from the plurality of channels into the combustion chamber. The plurality of channels are shaped to define a plurality of different routes for fuel flow to the ejection means so that combustible fuel zones develop in different regions of the combustion chamber at different times during the injection event to aid the combustion of fuel.

Preferably, the piston crown has a concave depression formed therein, and the combustor is disposed in the depression. By placing the combustor centrally within the concave depression (and thus centrally within the combustion chamber itself), the fuel spray zones are widely separated in the combustion chamber so that, untimely, detonation and combustion of fuel within this region will be prevented, thereby allowing fuel to mix more freely with air before being burnt.

In one embodiment of the second aspect, the combustor is formed integrally with the piston. The base of the combustor may thus conveniently include a non-conducting material for substantially preventing the transfer of heat from the combustor to the piston. The advantage of this is that if the combustor is kept at a higher temperature, then heat energy will not be lost from the fuel. Thus, fuel momentum will not substantially decrease enabling the fuel to penetrate further into the combustion chamber.

In one preferred embodiment, the apex is arranged to receive at least some of the fuel during at least a first period of the injection event and direct fuel into the plurality of channels.

The fuel injection means may include a single outlet for fuel, whereby fuel is directed through the single outlet towards the apparatus. Alternatively, the fuel injection means includes a plurality of outlets for fuel, wherein at least one of the outlets is oriented to deliver fuel to the apparatus, either to the apex and/or to the plurality of channels directly, and at least one of the other outlets is oriented to deliver fuel directly into the combustion chamber.

For example, at least one of the plurality of outlets is arranged to deliver fuel to the apex from where fuel is delivered to at least one of the plurality of channels and, hence, to the ejection means.

It will be appreciated that the preferred and/or optional features of the first aspect of the invention may be incorporated within the engine of the second aspect of the invention, alone or in appropriate combination.

### Brief Description of Drawings

Preferred embodiments of the present invention will be described, by way of example only, with reference to the accompanying drawings, in which:-
Figure 1a illustrates a combustor according to a first embodiment of the present invention, the combustor being disposed in a quiescent combustion chamber;
Figure 1b illustrates a combustor according to a second embodiment of the present invention, the combustor being disposed in a medium swirl combustion chamber;
Figure 2a is a side view of a combustor, according to a third embodiment of the present invention;
Figure 2b is a top plan view of the combustor shown in Figure 2a;
Figure 2c illustrates a part of the combustor shown in Figure 2a;
Figures 2d to 2f illustrate flow paths generated by the combustor shown in Figure 2a;
Figure 3a illustrates another part of the combustor shown in Figure 2a;
Figure 3b is a graph illustrating the profile of a portion of the part of the combustor of Figure 3a;
Figures 3c, 3d and 3e illustrate alternative shapes of portions of the part of the combustor shown in Figure 3a, according to alternative embodiments of the present invention;
Figures 4a to 4h are schematic side sectional views of the combustor shown in Figure 1a illustrating sets of flow paths generated by the combustor at various time periods during an injection event;
Figures 5a to 5h are schematic top plan views of the combustor and the sets of flow paths shown in Figures 4a to 4h, respectively;
Figures 6a and 6b illustrate respective plan and cross-sectional views of a combustor according to another embodiment of the present invention; and
Figures 7a and 7b illustrate respective plan and cross-sectional views of a combustor according to a further embodiment of the present invention.

### Detailed Description of the Preferred Embodiments

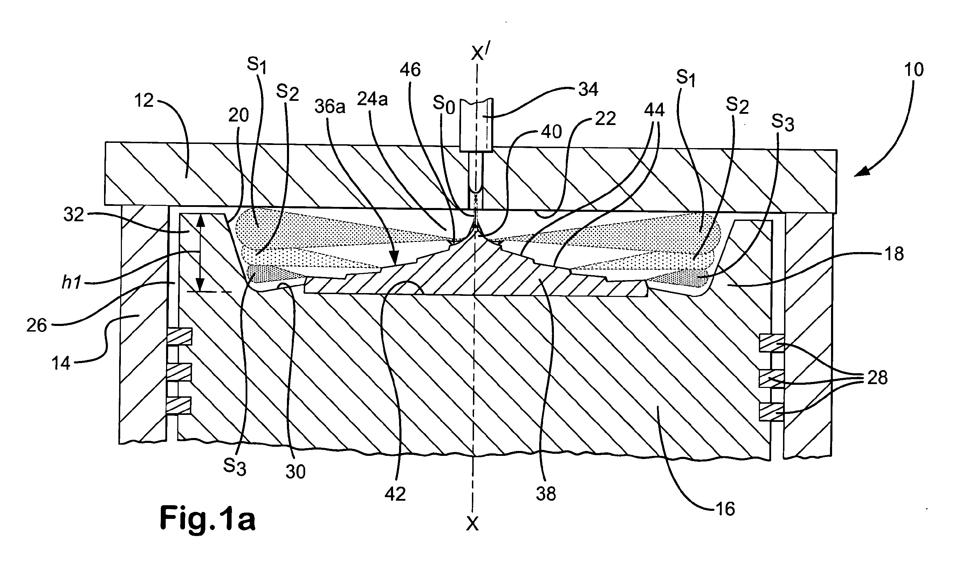

Referring firstly to Figure 1a there is shown an upper part of an engine cylinder 10 which may be provided in a diesel engine (not shown). In practice, a diesel engine will include typically four to eight such cylinders 10. The cylinder 10 comprises a cylinder head 12 and depending cylinder walls 14. A reciprocable piston 16 is provided in the cylinder 10, the upper portion of which is referred to as the piston crown 18. A shallow bowl-shaped depression 30 is formed in the central portion of the piston crown 18, leaving a circumferential raised wall portion 32 of the piston crown of height *h1*. The surface 20 of the depression 30, together with the lower surface 22 of the cylinder head 12, define a "quiescent combustion chamber" 24a which is suitable for use in large engines.

Although not illustrated herein, the piston 16 is connected, via a connecting rod, to a crankshaft of the engine which causes the piston 16 to reciprocate along a rectilinear path within the cylinder 10 as the crankshaft rotates. In order to allow the piston 16 to move freely within the cylinder 10 a small clearance 26 is provided between the piston 16 and the cylinder walls 14. To prevent leakage of gas through the clearance 26 a set of radial piston rings 28 is provided in the clearance.

During an injection event, high pressure fuel is directly injected into the quiescent combustion chamber 24a via the outlet of a fuel injector 34 which is disposed in an aperture in the cylinder head 12. It should be understood that the fuel injector 34 may be any type of injector capable of injecting high pressure fuel via a single or centrally positioned nozzle outlet. Although not shown in Figure 1a, an intake passage is provided which directs intake air into the combustion chamber 24a by means of one or more intake valves, and an exhaust passage is also provided which directs exhaust gas from the combustion chamber by means of one or more outlet valves.

As an aid to the combustion of fuel injected into the quiescent combustion chamber 24a, an apparatus 36a according to a first embodiment of the invention is disposed in the depression 30 formed in the piston crown 18. The apparatus takes the form of a combustor 36a comprising a conical combustor body 38 having a conical outer surface, an apex 40 and a substantially circular base 42. The apex 40 of the combustor 36a is positioned directly below the outlet of the fuel injector 34 and close enough to the outlet to prevent injected fuel atomising before the desired time. There is also defined a combustor axis X-X' which extends from the apex 40 to the base 42 of the combustor 36a.

The outer surface of the combustor body 38 is provided with a sequence of circumferential steps 44 (i.e. steps which extend around the circumference of the combustor body), the sequence cascading axially along the combustor body 38 between the apex 40 and the base 42. The steps 44 act to minimise the fuel contact points with the combustor body 38, thereby substantially maintaining the momentum of the fuel and enabling it to penetrate further into the combustion chamber 24a. To direct fuel down the outer surface of the combustor body 38 there are provided a plurality of substantially longitudinal channels (not shown), of u- or v-shaped cross-section, which are defined by grooves formed in the combustor body 38. These channels will be described in detail later. Positioned at fuel ejecting ends of the channels is a fuel ejection means in the form of a plurality of ramps (also not shown in Figure 1a), referred to as 'fuel ejecting ramps', which eject the fuel from the combustor into the combustion chamber 24a.

The ejection means further includes a plurality of fuel receiving and ejecting wings 46 attached to the combustor body 38 in the region of the apex 40. The overall height of the combustor 36a, including the wings 46, is less than the height *h1* of the raised wall portion 32 of the piston crown 18 such that a gap exists between the lower surface 22 of the cylinder head 12 and the apex 40 of the combustor body 38 when the piston 16 is at its uppermost position within the cylinder 10.

During an injection event, fuel is injected from the outlet of the fuel injector 34 into the quiescent combustion chamber 24a in the form of a jet S₀. Depending on the cone angle of the fuel jet S₀, all or a portion of the injected fuel is received by, and ejected from, the wings 46 into the upper region of the combustion chamber 24a, as a first fuel spray S₁, for subsequent atomisation and detonation. When the cone angle that the fuel jet S₀ makes with the wings 46 is relatively small, fuel is not received by the wings 46 but is directed from the combustor apex 40 down the outer surface of the combustor body 38 via the u- or v-shaped channels. A portion of this fuel is ejected via the fuel ejecting ramps into a middle region of the combustion chamber 24a as a second fuel spray S₂, and the rest of the fuel travels further down the outer surface of the combustor body 38 via the channels. This fuel is then ejected from further fuel ejecting ramps (not shown) provided in the region of the combustor base 42 into a lower region of the combustion chamber 24a as a third fuel spray S₃. In this manner, fuel is ejected into different regions of the combustion chamber 24b at different times, depending on which flow route the fuel has taken over the combustor, so that different fuel spray zones will develop at different times for combustion. The fuel spray S₁ will develop as a combustible fuel spray prior to the second fuel spray S₂, which in turn develops as a combustible fuel spray prior to the third fuel spray S₃.

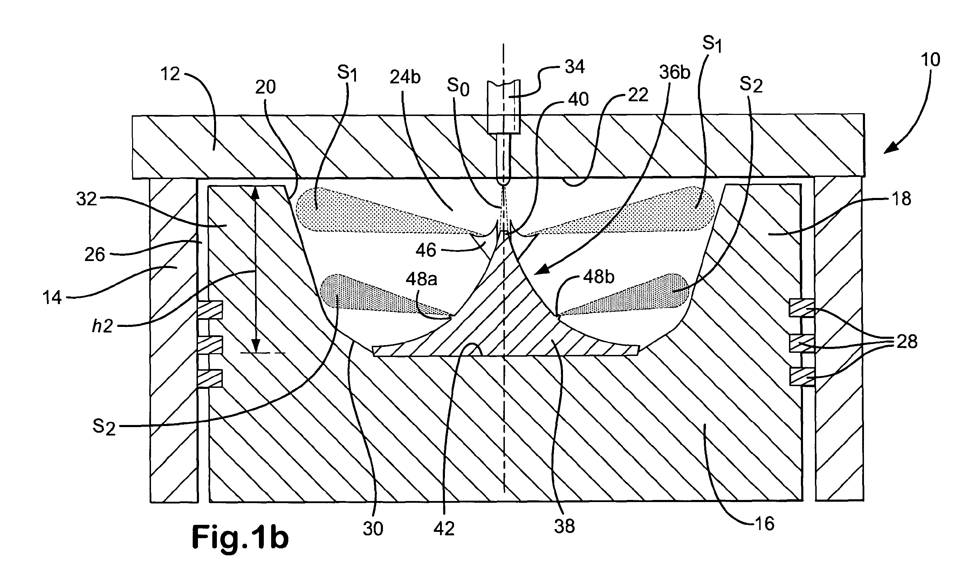

Turning now to Figure 1b, there is shown an upper part of an engine cylinder 10 similar to that shown in Figure 1a, with like parts having like reference numerals. In this case, a deep bowl-shaped depression 30 is formed in the piston crown 18, leaving a circumferential raised wall portion 32 of height *h*2 which is greater than *h1*. Although the depression 30 is of greater depth than that formed in the piston 16 of Figure 1a, it has a smaller circumference and therefore forms a deeper but narrower combustion chamber 24b than that shown in Figure 1a. Such a combustion chamber 24b is commonly referred to as a "medium swirl combustion chamber", and is suitable for use in small engines.

A combustor 36b according to a second embodiment of the present invention is disposed in the depression 30 formed in the piston crown 18. The combustor 36b is similar to that shown in Figure 1a, with like parts having like reference numerals. In this case, due to the dimensions of the medium swirl combustion chamber 24b, the combustor 36b is of a greater overall height than the combustor 36a of the first embodiment shown in Figure 1a, but it has a base 42 of smaller diameter so that it locates with the depression 30. The combustor 36b of Figure 1b thus has a steeper outer surface with a higher degree of concavity than the combustor 36a of Figure 1a.

The combustor 36b also has a plurality of u- or v-shaped fuel directing channels (not shown) which are defined by grooves formed in the outer surface of the combustor body 38. These channels will be described in detail later. Ramps 48a, 48b positioned at the fuel ejecting ends of the channels (i.e. the ends of the channels furthest from the apex 40 of the combustor) provide a means for ejecting fuel into the combustion chamber 24b from the combustor. In Figure 1b two such ramps 48a and 48b, are shown, although in practice it is likely that there would be more than two ramps.

As in the previously described embodiment, the combustor 36b is positioned in the depression 30 formed in the piston crown 18 such that its apex 40 lies directly below the single injector outlet.

During an injection event, fuel is injected from the outlet of the fuel injector 34 into the medium swirl combustion chamber 24b in the form of a fuel jet S₀. Depending on the cone angle of the fuel jet S₀, all or a portion of the injected fuel is received by, and ejected from, the wings 46 into the upper region of the combustion chamber 24b, along a first set of flow paths S₁, for subsequent combustion. When the cone angle that the fuel jet S₀ makes with the wings 46 is relatively small, fuel is not received by the wings 46 but is directed from the apex 40 of the combustor body 38 down the outer surface thereof via fuel the u- or v-shaped channels. This fuel is ejected by the ramps 48a, 48b into the lower region of the combustion chamber 24b, along a second set of flow paths S₂, for subsequent combustion. The effect is the same as for Figure 1a, whereby fuel is ejected into different regions of the combustion chamber 24b at different times to develop different fuel spray zones within the combustion chamber 24b, for atomisation and detonation, at different times.

Figures 1a and 1b both illustrate the pistons 16 within their respective cylinders 10 at top dead centre (TDC) which occurs when the crankshaft is positioned to move the piston 16 to its uppermost position away from the rotational axis of the crankshaft. In the conventional manner, which will be apparent to one skilled in the art, the piston 16 is movable from the top dead centre position to a bottom dead centre (BDC) position which occurs when the piston is in its lowermost position within the cylinder 10. High pressure fuel is injected into the combustion chamber 24a, 24b normally when the piston is rising from BDC to TDC, thus commencing an injection event. The rising of the piston 16 from BDC to TDC is known as the compression stroke as during this stroke air within the cylinder 10 is compressed to raise its temperature above the ignition temperature of the fuel. The injection event will generally be completed when the piston 16 is moving from TDC to BDC during its 'power' stroke.

During an injection event, the fuel emanating from the fuel injector 34 is in the form of a hollow conical jet of fuel S₀, which is ideally not atomised. As previously described, fuel is received and ejected by the wings 46 if the cone angle of the fuel jet S₀ is relatively large. Alternatively, if the cone angle of the fuel jet S₀ is relatively small, fuel passes down the outer surface of the combustor body 38 via the channels, and is then ejected into the combustion chamber via the ramps 48a, 48b. After fuel is ejected from the combustor (whether from the wings 46 or the ramps 48a, 48b) it starts to atomise, subsequently mixes with the compressed air in the combustion chamber 24a, 24b and then combusts. The combustion process creates energy and drives the piston 16 downwards in the cylinder 10 and thus turns the crankshaft. The process of splitting the fuel jet S₀ into a number of different sets of flow paths to develop into combustible fuel zones within the chamber 24b at different times has the effect of reducing hot sites in the combustion chamber 24b and, therefore, the amount of NOx produced during the combustion process is reduced.

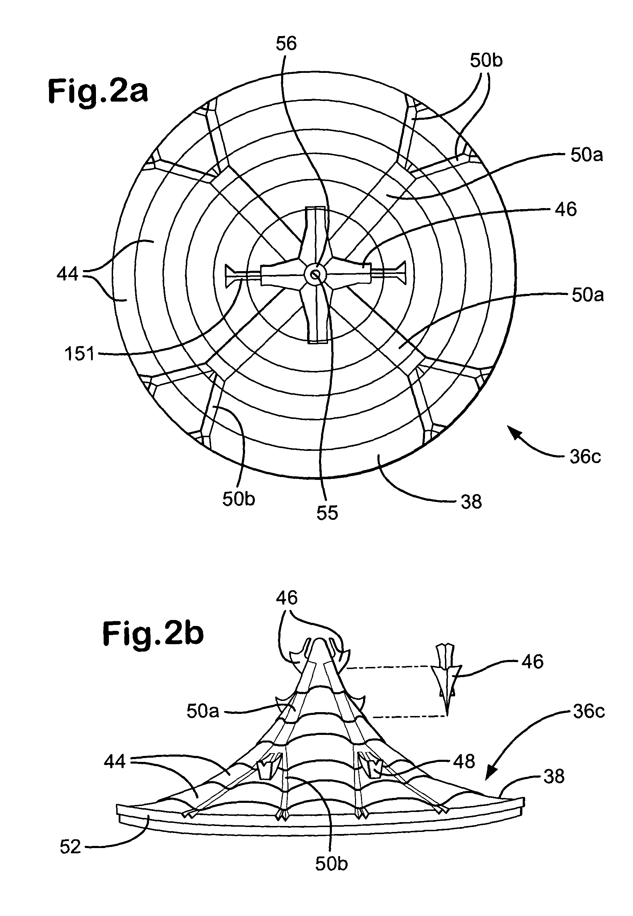

A combustor 36c according to a third embodiment of the present invention is shown in Figures 2a and 2b. Referring firstly to Figure 2a, the combustor 36c comprises a conical body 38 with a conical outer surface, four wings 46 attached to the combustor body 38 in the region of the apex 40, a plurality of circumferential steps 44, and a plurality of longitudinal u- and v-shaped channels 50a, 50b and 151 defined by grooves formed in the outer surface of the combustor body 38.

Turning to Figure 2b, it can be seen that the outer surface of the combustor body 38 extends past and overlaps the base thereof to form a skirt 52. It can also be seen that the combustor body 38 includes channels of different lengths. More particularly, there is provided a first set of four relatively long and relatively wide u-shaped channels 50a arranged at 90 degree intervals on the combustor body 38. These channels 50a extend from the region of the combustor apex 40 to approximately half-way along the combustor body 38, whereupon each channel 50a branches into two slightly shorter narrower channels 50b which extend to the base 42 of the combustor body. The positioning of the narrower channels 50b in the lower half of the combustor body 38 results in a greater mass of fuel flowing in the channels and less loss of fuel momentum. Maintaining fuel momentum enables fuel to be atomised more quickly in the combustion chamber. At the end of each channel 50a, where it splits into two narrower channels 50b, the combustor 36c is provided with a ramp 48. The provision of a ramp 48 provides three possible fuel pathways: i) fuel in the channel 50a may be ejected into the combustion chamber from the ramp 48; ii) fuel in the channel 50a may pass into one of the narrower channels 50b; and/or iii) fuel in the channel 50a may pass into the other of the narrower channels 50b.

A second set of shorter channels 151 is also formed in the combustor body 38. These channels 151 are narrower than the long channels 50b, are separated from one another by 180 degrees, and extend from the region of the combustor apex 40 to approximately one quarter of the way along the combustor body 38.

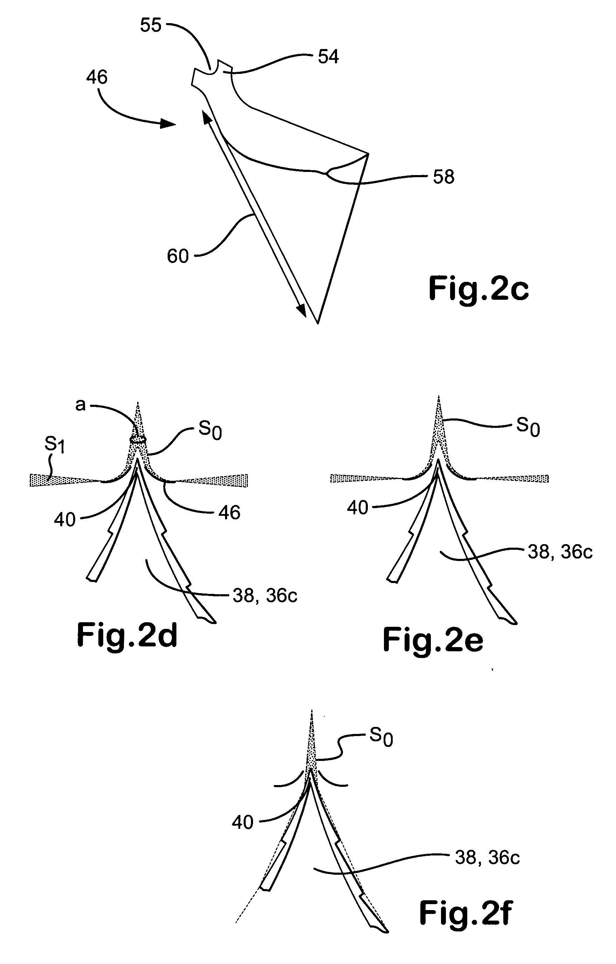

Referring now to Figure 2c, there is shown a single combustor wing 46. The wing 46 is generally conical with an apex and concave base. As can be seen from Figure 2a, the four wings 46 are arranged on the combustor body 38 such that their apices point towards the combustor base 42. Returning to Figure 2c, the base of the wing 46 has an extension (or "leading edge" 54) which, together with the leading edges of the other wings, form a circular platform 56 around the combustor apex 40. This platform 56 can be seen in Figure 2a. A portion of the leading edge 54 is cut-away so that a central hole 55 is formed in the platform 56. It is through this hole 55 that fuel passes if the cone angle of the fuel jet S₀ is relatively small.

The portion of the wing 46 which attaches to the combustor body 38 is in the form of a knife-edge 60. This minimises the area of contact of the wing 46 with the combustor body 38, so that fuel may also pass down the outer surface of the combustor body after it has passed through the hole 55 formed in the platform 56. The leading edge of the wing 46 is smoothly contoured to funnel fuel to the channels. The concave base of the wing 46 has a fuel ejection point 58 formed therein from which fuel is ejected. The fuel ejection point 58 is situated opposite the leading edge 54 of the wing 46. The shape of the fuel ejection point 58 determines the angle at which the fuel is ejected from the wing 46.

Figures 2d, 2e and 2f illustrate the pathways taken by the fuel jet S₀ at various time periods during an injection event.

Figure 2d shows the start of an injection event where the cone angle, *a*, of the fuel jet S₀ is relatively large. This is due to a volume of air being present between the fuel injector outlet and the combustor apex 40 which mixes with the fuel jet S₀ and thereby increases its the cone angle, *a*. As the wings 46 extend outwardly from the region of the combustor apex 40, fuel is received by the wings and is ejected from the fuel ejection points 58 into the combustion chamber 24a,24b along a set of flow paths S₁. After the air in the vicinity of the combustor apex 40 has been expended, the pressure in this area is lowered. This effectively reduces the cone angle, *a*, of the fuel jet S₀ and draws it closer to the combustor body 38, as illustrated in Figure 2e.

Moving onto Figure 2f, the cone angle, *a*, of the fuel jet S₀ has now decreased and fuel is thus permitted to pass through the central hole 55 formed in the platform 56 and then down the outer surface of the combustor body 38 for subsequent ejection and combustion. It should be noted that the switching of the flow paths can also occur due to the cone angle, *a*, of the fuel jet S₀ changing as the combustor 36c moves within the cylinder 10. This is discussed in further detail below.

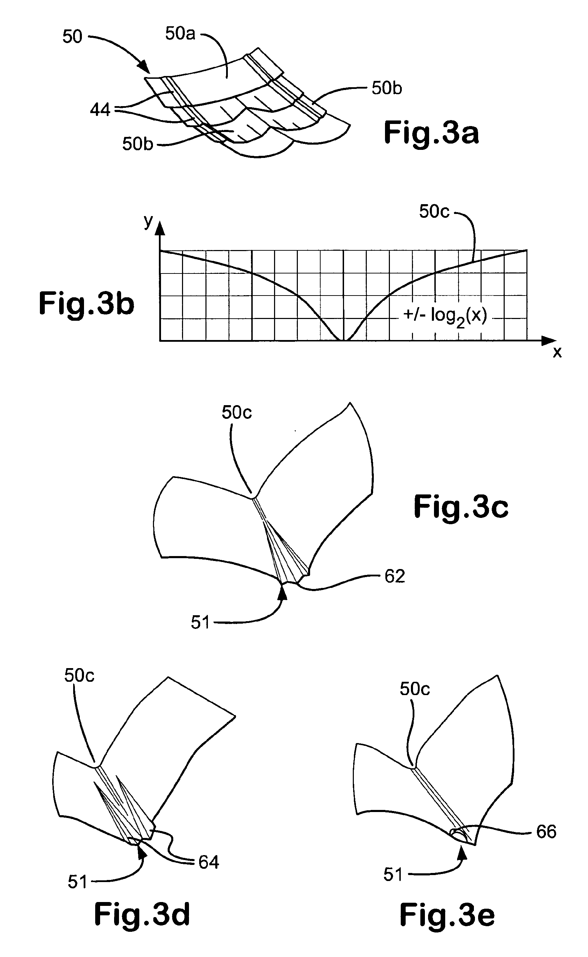

Turning now to Figure 3a, the branched structure of the channels 50a and 50b provided in the combustor 36c according to the third embodiment of the present invention can be seen more clearly. The longer channel 50a is relatively shallow, concave and of u-shape cross-section. This single channel 50a is then split into two deeper and more concave channels 50b for directing fuel down towards the base of the combustor body 38. Also shown in Figure 3a are the circumferential steps 44 which the channels 50a, 50b intersect. Although not shown, the narrower channels 50b can be split into further, narrower channels that eventually lead to ramps for ejecting fuel into the combustion chamber. Examples of such narrower channels are illustrated in Figures 3c, 3d and 3e.

Referring now to Figure 3c, there is shown a narrower channel 50c having a v-shaped cross-section which may be defined by the expression y = +/- log₂(x) (see Figure 3b). The v-shaped cross-section of the channel 50c enables the frontal cross-sectional area of the fuel to be minimised, and acceleration of fuel prior to launch. The ejection means is provided by an ejection feature 62 at the point 51 where fuel leaves the channel (i.e. the ejection site 51) in order to influence the manner in which the fuel is delivered into the combustion space. For example, the ejection feature 62 may be arranged to split the fuel into two separate fuel sprays, and is referred to hereinafter as a "splitter". Figure 3d also illustrates the narrower channel 50c, but in this case a "spinner" 64 is provided at the ejection site 51. The spinner 64 splits the fuel into two separate fuel sprays, and further acts to rotate the two separate fuel sprays. Figure 3e shows the narrower channel 50c having an "impactor" 66 provided at the ejection site 51. The impactor 66 acts as an obstacle to the flow of fuel in the channel 50c, and spatters the fuel as it leaves the channel. The impactor 66 may be angled so as to vary the spatter of fuel. Spinners 64 and impactors 66 serve to reduce fuel momentum and accelerate the atomisation of the fuel after it has been ejected from the ramp placed at the end of a channel. Such features are therefore more suitable for use within shorter channels.

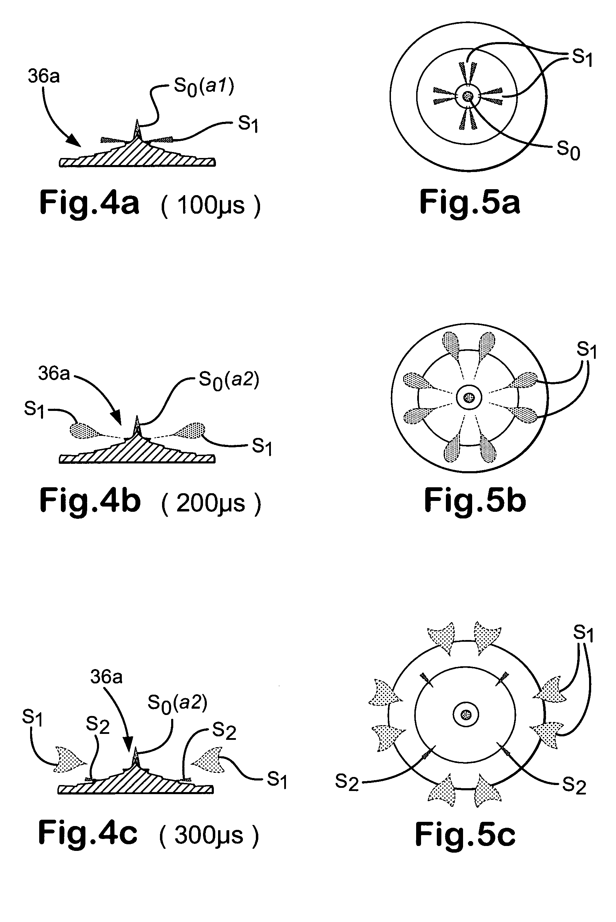

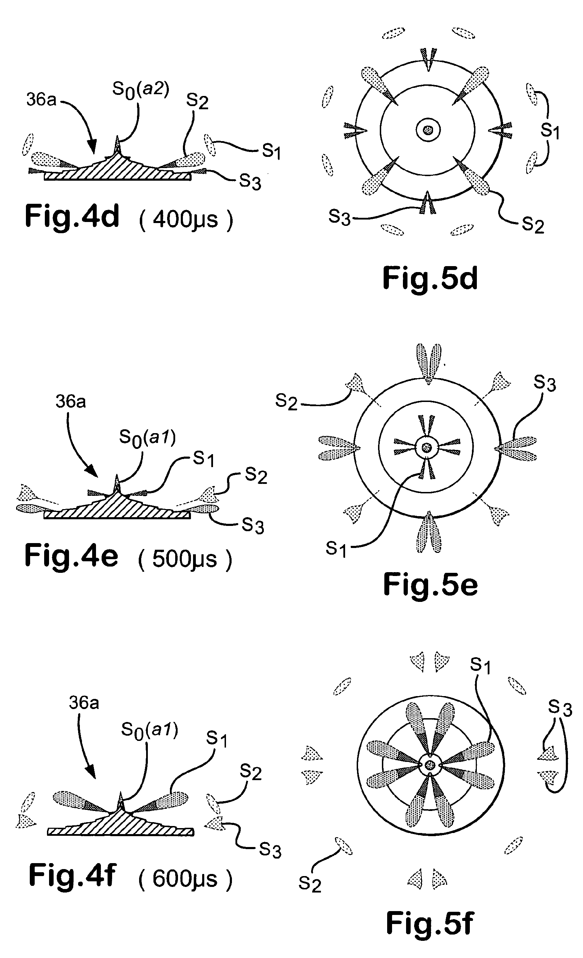

Referring now to Figures 4a to 4g and 5a to 5g, show different sets of flow paths generated by the combustor 36a during a single 1000 microsecond injection event are shown and described. The injection event commences when the piston 16 is rising within the cylinder 10 towards its top dead centre position.

With reference to Figure 4a, 100 microseconds into the injection event the piston 16 has risen further in the cylinder 10 towards TDC and thus the combustor 36a has moved further towards the fuel injector 34. However, as the combustor apex 40 is some way from the fuel injector outlet, the cone angle, *a1,* of the hollow fuel jet S₀ emanating therefrom is relatively wide. As a result, all of the fuel is intercepted by the combustor wings 46 and is then ejected therefrom via the fuel ejection points 58 into the combustion chamber 24a along a first set of flow paths S₁. The plan view of Figure 5a shows in more detail that each portion of the fuel jet S₀ received by each of the four combustor wings 46 is split into two separate sprays which travel along the first set of flow paths S₁. This splitting of the fuel jet S₀ may be effected by providing a splitter 62 at the fuel ejection point 58 of each combustor wing 46.

Referring now to Figures 4b and 5b, 200 microseconds after the start of the injection event the piston 16 has risen further within the cylinder 10 and thus the cone angle, *a2*, of the fuel jet S₀ has decreased from its initial value *a1*. The fuel is therefore not received by the combustor wings 46, but passes through the hole 55 provided in the platform 56 formed by the wings 46, and then down the fuel directing channels 50. At this moment, fuel in the first set of flow paths S₁ has travelled further into the combustion chamber and has become atomised.

At 300 microseconds into the injection event, the piston 16 has risen even further within the cylinder 10 and is now approaching TDC. Looking at Figure 4c, the cone angle, *a2*, the fuel jet S₀ makes with the combustor 36a is approximately the same as for the previous time period. Fuel in the first set of flow paths S₁ has now travelled even further into the combustion chamber 24a and has begun to combust. In the meantime, a portion of the fuel within the channels 50 is ejected via ramps 48 into the combustion chamber 24a along a second set of flow paths S₂ (see Figure 5c). The remainder of the fuel continues to pass down the channels 50 towards the combustor base 42.

At 400 microseconds into the injection event the piston 16 is at (or has just moved beyond) TDC, and thus the combustor apex 40 is at its closest position to the fuel injector outlet. The cone angle, *a2*, of the fuel jet S₀ at the combustor apex 40 is approximately the same as in the previous time period. Fuel in the first set of flow paths S₁ has lost the majority of its momentum and is therefore no longer visible in the Figure. Meanwhile, fuel in the second set of flow paths S₂ has atomised further, and the remaining fuel has travelled down the combustor body 38 via the channels 50 and the circumferential steps 44, and is ejected via ramps 48 into the combustion chamber along a third set of flow paths S₃. From Figure 5d it can be seen that the channels 50 from which fuel in the third set of flow paths S₃ is ejected contain a splitter 62, so that the fuel ejected from a single such channel 50 is split into two separate sprays.

With reference now to Figures 4e and 5e, at 500 microseconds after the commencement of the injection event, the piston 16 has passed TDC and is now moving downwards within the cylinder 10 during an initial phase of its power stroke. At this time, fuel is still being injected into the combustion chamber 24a and the cone angle, *al*, of the injected fuel jet S₀ has increased with respect to the previous time period. This causes the fuel jet S₀ to be intercepted by the combustor wings 46 and ejected therefrom along the first set of flow paths S₁. The plan view of Figure 5e shows in more detail that the portion of the fuel jet S₀ received by each of the four combustor wings 46 is split into two separate sprays by the splitters 62 provided at the fuel ejection points 58. At the same time, fuel in the second set of flow paths S₂ is undergoing combustion, and fuel in the third set of flow paths S₃ has atomised further.

Moving on to Figures 4f and 5f, 600 microseconds into the injection event the piston 16 has now moved further towards BDC and the cone angle, *a2*, of the fuel jet S₀ is still large enough for it to be intercepted by the combustor wings 46 and ejected therefrom into the combustion chamber along the first set of flow paths S₁. Meanwhile, fuel in the first set of flow paths S₁ which was ejected from the combustor wings 46 during the previous time period has become atomised, fuel in the second set of flow paths S₂ has combusted, and fuel in the third set of flow paths S₃ is undergoing combustion.

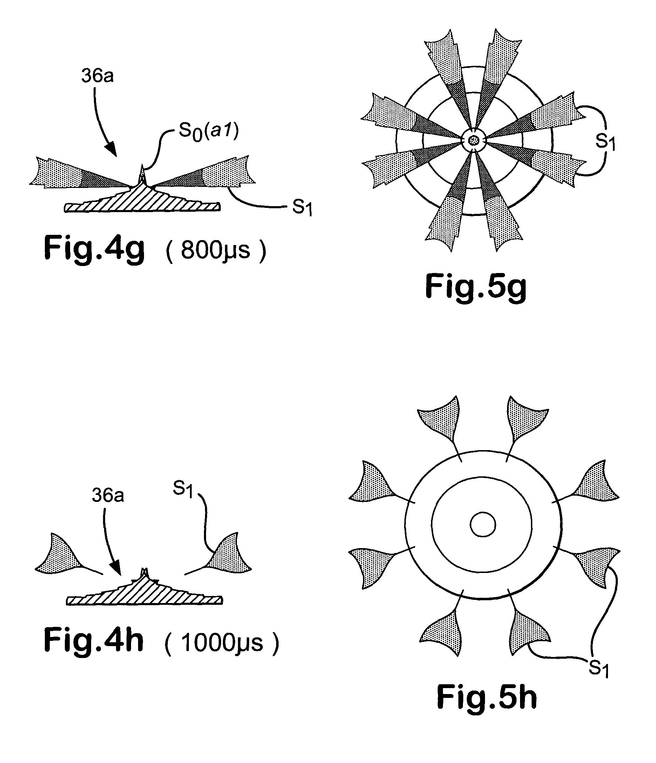

At 800 microseconds after the injection event, the piston 16 is still moving towards BDC and thus the cone angle, *al*, of the fuel jet S₀ is still large enough such that all of the fuel ejected by the fuel injector is received by, and ejected from, the combustor wings 46 along the first set of flow paths S₁. Figures 4g and 5g illustrate that the fuel in the first set of flow paths S₁, which was ejected into the combustion chamber during the previous time period, has become atomised.

Finally, at 1000 microseconds after the commencement of the injection event, it can be seen from Figures 4h and 5h that fuel injection has now terminated and the fuel remaining in the first set of flow paths S₁ now combusts. The combustion process for this injection event is thus complete.

It will be apparent from the above that the use of the combustor in this manner has enabled the ejection of fuel into different regions of the combustion chamber to be achieved, so that different combustible fuel zones develop in the combustion chamber at different times, depending on the flow route they have taken in being transferred from the combustion chamber entry point, via the combustor and the ejection means. This allows the combustion of fuel to be controlled and slowed for the first 500 microseconds after the commencement of the injection event (based on a typical 500cc cylinder). This results in more timely mixing of the fuel and air and a diminution of hot sites in the combustion chamber, enabling a reduction in NOx and particulate matter. Also, the fuel is burnt more efficiently.

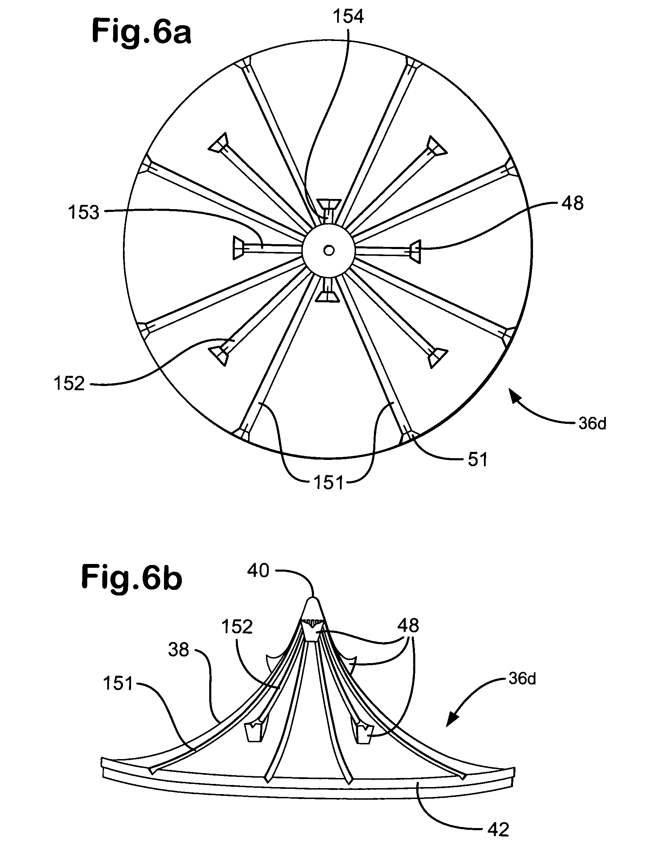

A combustor 36d according to a fourth embodiment of the invention is shown in Figures 6a and 6b. This combustor 36d is similar to that illustrated in Figure 1b in that it comprises fuel directing channels and ramps 48 positioned at the ends thereof, but it has no wings 46 and no circumferential steps 44.

Referring to Figure 6a, it can be seen that the combustor 36d has fuel directing channels of different lengths. More particularly, there is provided a first set of eight relatively long channels 151 (arranged at 45 degree intervals on the combustor body 38) which extend from the combustor apex 40 to the combustor base 42. A second set of four shorter channels 152 (arranged at 90 degree intervals on the combustor body 38) is also provided.

These shorter channels 152 extend part-way from the combustor apex 40 towards the combustor base 42. A third set of two even shorter channels 153 is also provided, these channels being arranged opposite one another on the combustor body 38. These shorter channels 153 extend from the combustor apex 40 to approximately midway along the combustor body 38. Finally, there is provided a fourth set of two very short channels 154 positioned opposite one another on the combustor body 38, and at right angles to the third set of channels 153. By providing sets of channels 151, 152, 153, 154 of different lengths, regulation of the rate of fuel combustion can be controlled as the fuel will be launched into the combustion chamber 24a,24b at different time periods. Furthermore, as the channels 151, 152, 153, 154 and ejection sites 51 are widely separated on the combustor body 38, more cool air is available for combustion.

As can be seen From Figure 6b, the ramps 48 are positioned at the ends of the second, third and fourth sets of channels 152, 153 and 154. The ends of the each of the first set of long channels 151 have a cross-section of the form illustrated in Figure 3b for the ejection of fuel into the combustion chamber. This acts to minimise the frontal cross-sectional area of the fuel being ejected from the channels 151, and to accelerate the fuel prior to launch.

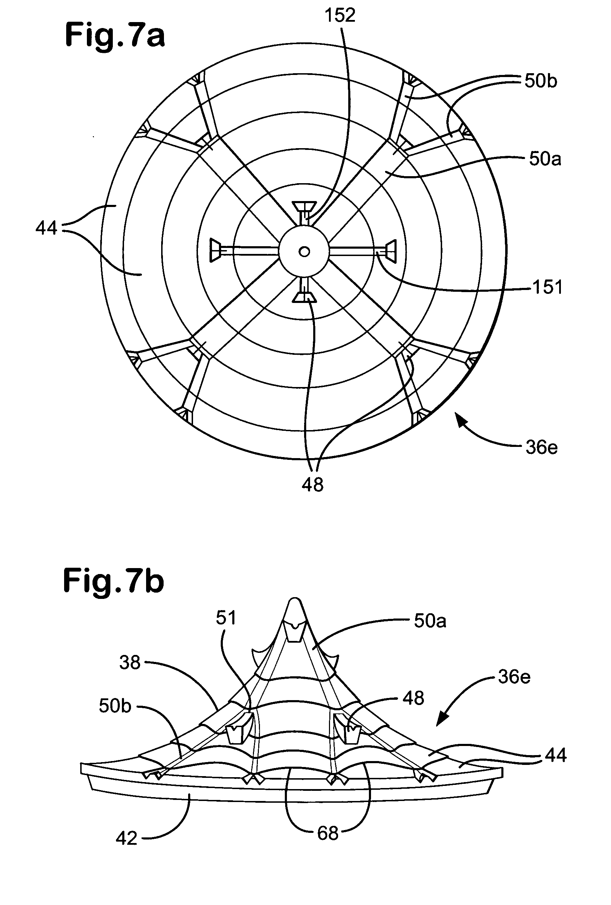

Figures 7a and 7b show a fourth embodiment of the combustor 36e according to the present invention. This combustor 36e is similar to that shown in Figures 2a and 2b (with like parts having like reference numerals) but does not include wings. The combustor 36e of the present embodiment includes a set of four relatively wide and relatively long channels 50a which extend approximately half-way along the combustor body 38, and each of which splits into two narrower channels 50b extending to the combustor base 42. The combustor 36e also includes a set of two short narrow channels 151 which extend from the combustor apex 40 to approximately one quarter of the way along the combustor body 38, and are separated from one another by 180 degrees. An additional set of two even shorter channels 152 are also provided, these two shorter channels 152 being provided at right angles to the short channels 151. Ramps 48 may be provided at the points where the channels 50a split into narrower channels 50b. Ramps 48 may also be provided at the ends of the short channels 151 and 152, as illustrated in Figure 7a. As with the combustor 36c of the third embodiment, at the ends of each of the narrower channels 50b there may be provided other features for ejecting fuel into the combustion chamber 24a,24b, such as splitters 62, spinners 64, or impactors 66. Alternatively, the ends of the narrower channels 50b may be formed with the cross-section shown in Figure 3b.

The combustor 36e of Figures 7a and 7b further comprises a plurality of circumferential steps 44. As previously described, the circumferential steps 44 enable friction between the fuel and the combustor body 38 to be reduced. This reduction in friction permits the fuel energy to be used to enable the fuel to mix more quickly with the air in the combustion chamber, and thus to ensure more complete combustion. As with all the previously described embodiments, regions 68 of the combustor body 38 located between the channels 50a, 50b, 151 and 152 are slightly convex in shape such that fuel which impinges on these regions is directed into the channels.

In another aspect of the invention (not shown), the combustor described previously may be used in an engine where the single outlet of the fuel injector 34 is replaced by a plurality of outlets for delivering fuel into the combustion chamber. In one example, a relatively large outlet may be used to direct a fuel spray at the combustor apex 40, as described previously, so that fuel is supplied to the combustion chamber 24a, 24b via the channels 50a, 50b, 50c and the associated ejection means. In addition, one or a plurality of smaller outlets may be provided to inject fuel directly into the combustion chamber so that these fuel sprays do not impact the combustor body 38. Typically, two smaller outlets may be provided to deliver a combustible fuel spray zone into the combustion chamber directly, one of the smaller outlets being provided on each side of the larger, central injector outlet. The fuel sprays from the smaller outlets atomise, and hence develop combustible zones, earlier than the sprays delivered via the combustor so that different combustible fuel spray zones develop at different times.

It is also possible for the central injector outlet to be removed, so that none of the fuel is supplied to the apex 40 but is delivered directly to the channels 50a, 50b, 50c via the smaller outlets. Alternatively, the central injector outlet may be reoriented so that it also delivers fuel directly to the channels 50a, 50b, 50c.

Having described particular preferred embodiments of the present invention, it is to be appreciated that the embodiments in question are exemplary only and that variations and modifications such as will occur to those possessed of the appropriate knowledge and skills may be made without departure from the scope of the invention as set forth in the appended claims. For example, it will be appreciated that the combustor could be formed as a separate unit, or be formed integrally with the piston. A layer of insulating material may be provided between the base of the combustor and the piston crown so as to maintain the temperature of the combustor, thereby to improve fuel combustion.

Additionally, the number, cross-sectional profile, position and length of the channels may be varied according to the desired characteristics of combustion, as can the shape and dimensions of the combustion chamber in which the combustor is disposed. The variation in the cross-sectional profile of the channels may be used to regulate the timing, quantity, trajectory and density of the fuel in the flow paths e.g. S₀ to S₃. The position from which fuel is ejected from a channel may also be varied. For example, a fuel ejection site may be placed part way along a channel, rather than at an end of the channel. Alternatively, all the fuel ejection sites (e.g. ramps) could be sited at different longitudinal positions on the combustor body, such that each portion of fuel is ejected therefrom at a different time period during an injection event.

Although there are limitations on the number of fuel paths that can be supported in a high pressure combustion chamber, the number provided by the present invention is expected to be approximately three times greater than in a conventional injection system, whilst achieving the same degree of spray penetration into the combustion chamber. The reasons for this are as follows. Firstly, the length of the fuel paths in the present invention are approximately 10% to 70% shorter than in an equivalent conventional system, and the diameter of the fuel paths and the number of molecules of fuel which they contain are also proportionately smaller. Secondly, the switching of the fuel trajectory between the channels in the branched-channel structure approximately doubles the number of fuel paths which can be supported without any loss of spray penetration. Thirdly, by splitting the channels in the base region of the combustor (rather than in the apex region nearer the injector), fuel momentum is preserved and thus fuel can penetrate further into the combustion chamber.

It is likely that the best combustor performance will be achieved where the lengths of the paths that the fuel takes from the injector to all parts of the cylinder wall are as short as possible to avoid an unnecessary increase in friction whilst the fuel is moving, and also where the time periods at which fuel is ejected into the combustion chamber are as widely spaced as possible to reduce the initial rate of fuel combustion. These conditions are most likely to be achievable in a quiescent combustion chamber of the type shown in Figure 1a. However, as described herein, a combustor according to the present invention may also be used to improve fuel combustion in different types of combustion chambers.

Potential performance improvements are envisaged to be greater for small engines requiring less spray penetration into the combustion chamber. Hitherto these have been less adaptable to conventional high-pressure technology owing to difficulties making the small outlets required in the injector nozzles. There is also a possibility the emission improvements afforded by the combustor could reduce the need for as much swirl. Furthermore, engines which do not utilise pilot injections may also benefit from the use of the combustor of the present invention, as the provision of different flow paths mimics the provision of close-coupled pilot injections.

## Claims

1. An apparatus (36a,36b,36c,36d,36e) for improving combustion in a direct-injection internal combustion engine comprising at least one cylinder (10) having a combustion chamber (24a,24b) for receiving injected fuel during an injection event, the apparatus comprising a substantially conical body (38) having a concave outer surface, an apex (40), a plurality of channels (50a,50b) formed in the concave outer surface for receiving injected fuel and ejection means (48) arranged to eject fuel from the plurality of channels (50a,50b,50c) into the combustion chamber (24a,24b), wherein the plurality of channels (50a,50b,50c) define a plurality of different flow routes for fuel to the ejection means (48) so that combustible fuel spray zones develop in different regions of the combustion chamber at different times during the injection event to aid the combustion of fuel.

2. The apparatus as claimed in claim 1, wherein the apex (40) is arranged to receive fuel that is injected into the combustion chamber (24a, 24b) during at least a first period of the injection event and to direct fuel into the plurality of channels (50a,50b,50c).

3. The apparatus (36a,36b,36c,36e) as claimed in Claim 2, wherein the ejection means further comprises a plurality of wings (46) arranged in the region of the apex (40), each wing being shaped and dimensioned to receive fuel and to eject a combustible fuel spray zone to the combustion chamber during a second period of the injection event.

4. The apparatus (36a,36b,36c,36e) as claimed in Claim 3, wherein the plurality of wings (46) form a substantially circular platform (56) around the apex (40), the platform having a substantially central aperture (55) defined therein thereby allowing fuel to be directed to the apex (40) during the first period of the injection event.

5. The apparatus (36a,36b,36c,36e) as claimed in Claim 2 or Claim 3, wherein each wing (46) comprises an inverted substantially conical body having a concave base for receiving and ejecting fuel, and wherein each wing (46) is attached to the conical body (38) via a knife-edge (60) so as not to impede the flow of fuel to the plurality of channels (50a, 50b) during the first period of the injection event.

6. The apparatus (36c,36d,36e) as claimed in any one of the preceding claims, wherein at least one, or each of, the plurality of channels (50a,50b,50c) is of a different length.

7. The apparatus (36c,36d) as claimed in Claim 6, wherein at least one of the channels (151) extends substantially the full axial length of the combustor body (38).

8. The apparatus (36d) as claimed in Claim 7, wherein at least one of the channels (50a,50b,50c,152,153,154) extends only part-way along the combustor body (38).

9. The apparatus (36c,36e) as claimed in any one of the preceding claims, wherein at least one of the plurality of channels (50a) is in communication with a plurality of further channels (50b) to form a branched channel structure.

10. The apparatus (36a,36b,36c,36d,36e) as claimed in any one of the preceding claims, wherein the plurality of channels (50a,50b) are substantially u- or v-shaped in cross-section along at least part of their length.

11. The apparatus (36a,36b,36c,36d,36e) as claimed in Claim 10, wherein the v-shaped cross-section of the channel (50a, 50b) is defined by the expression y= +/- log₂(x).

12. The apparatus (36a,36b,36c,36d,36e) as claimed in any one of the preceding claims, wherein the ejection means is defined by an end (51) of a channel (50a,50b).

13. The apparatus (36a,36b,36c,36d,36e) as claimed in any one of Claims 1 to 11, wherein the ejection means includes a ramp (48) arranged at the end (51) of a channel (50a,50b,152,153,154).

14. The apparatus (36a,36b,36c,36d,36e) as claimed in Claim 12 or Claim 13, wherein the ejection means includes a splitter (62) which serves to split the fuel flow through the associated one of the channels (50c) into two or more fuel sprays.

15. The apparatus (36a,36b,36c,36d,36e) as claimed in Claim 12 or Claim 13, wherein the ejection means includes a spinner (64) which serves to split the fuel flow through the associated one of the channels (50c) into two or more fuel sprays and further serves to impart rotational motion to said fuel sprays.

16. The apparatus (36a,36b,36c,36d,36e) as claimed in Claim 12 or Claim 13, wherein the ejection means includes an impactor (66) which acts as an obstacle to fuel flow through the associated one of the channels (50a, 50b) so as to spatter fuel as it leaves the channel (50c).

17. The apparatus (36a,36c,36e,36f) as claimed in any one of the preceding claims, further comprising a plurality of circumferential steps (44) formed on the conical body (38) for substantially maintaining the momentum of fuel as it traverses the conical body.

18. A direct-injection internal combustion engine comprising at least one cylinder (10) having a cylinder head (12), a piston (16) reciprocable within the at least one cylinder (10) and having piston crown (18) facing the cylinder head (12), a combustion chamber (24a, 24b) defined by at least the piston crown (18) and the cylinder head (12), fuel injection means (34) for injecting fuel into the combustion chamber (24a,24b) during an injection event, and an apparatus (36a, 36b, 36c, 36d, 36e) provided on the piston crown (18) comprising a substantially conical body (38) having a concave outer surface, an apex (40), a plurality of channels (50a,50b) formed in the concave outer surface and ejection means (48) arranged to eject fuel from the plurality of channels (50a,50b) into the combustion chamber (24a,24b), wherein the plurality of channels (50a,50b) define a plurality of different flow routes for fuel to the ejection means (48) so that combustible fuel spray zones develop in different regions of the combustion chamber (24a, 24b) at different times during the injection event to aid the combustion of fuel.

19. The direct-injection internal combustion engine as claimed in Claim 18, wherein the piston crown (18) has a concave depression (30) formed therein, and wherein the combustor (36a,36b,36c,36d,36e) is disposed in the depression.

20. The direct-injection internal combustion engine as claimed in Claim 18 or Claim 19, wherein the apparatus (36a,36b,36c,36d,36e) is formed integrally with the piston (16).

21. The direct-injection internal combustion engine as claimed in Claim 20, wherein the base (42) of the apparatus (36a, 36b, 36c, 36d, 36e) includes a non-conducting material for substantially preventing the transfer of heat from the apparatus (36) to the piston (16).

22. The direct-injection internal combustion engine as claimed in any one of Claims 18 to 21, wherein the apex (40) is arranged to receive at least some of the fuel during at least a first period of the injection event and to direct fuel into the plurality of channels (50a,50b,50c).

23. The direct-injection internal combustion engine as claimed in any one of Claims 18 to 22, wherein the fuel injection means (34) includes a single outlet for fuel, whereby fuel is directed through the single outlet towards the apparatus (36a, 36b, 36c, 36d, 36e).

24. The direct-injection internal combustion engine as claimed in any one of Claims 18 to 23, wherein the fuel injection means (34) includes a plurality of outlets for fuel, wherein at least one of the outlets is oriented to deliver fuel to the apparatus (36a, 36b, 36c, 36d, 36e) and at least one of the other outlets is oriented to deliver fuel directly into the combustion chamber (24a, 24b).
